# EUROPEAN PATENT APPLICATION

(11) **EP 1 433 812 A1**
(43) Date of publication of application: **30.06.2004**
(21) Application number: 02080662.6
(22) Date of filing: 20.12.2002
(51) Int. Cl.: C08L 23/16, C08L 23/10, C08K 5/55

(54) **Thermoplastic elastomer compositions and process for preparing them**

(71) Applicant: DSM IP Assets B.V., 6411 TE Heerlen (NL)
(72) Inventor: Duin Van, Martin, 6134 AC Sittard (NL); Debets, Wilhelmus Antonius Marie, 6137 JA Sittard (NL)

(57) **Abstract**

A thermoplastic elastomer composition is provided thermoplastic elastomer composition comprising a thermoplastic polymer, an at least partially borane-vulcanized elastomer, and, optionally, an extender oil. Preferably, the composition is fully cured and further comprises at least one of a metal halide and a metal oxide. Most preferred is a PP/EPDM thermoplastic vulcanizate (TPV) comprising both SnCl₂ and ZnO. Also provided is a process for preparing such thermoplastic elastomer compositions.

## Description

The invention relates to thermoplastic elastomer compositions comprising a thermoplastic polymer, an elastomer component which is at least partially vulcanized, and, optionally, an extender oil, as well as a dynamic vulcanization process for preparing them.

Dynamic vulcanization, in contrast to static vulcanization, embraces the curing of a rubber composition during its mixing or mastication, and one of the ingredients of this rubber composition must be a thermoplastic resin. This process results in an elastomeric alloy material, called thermoplastic vulcanizate (TPV), as a category of thermoplastic elastomers (TPEs), with elastic and mechanical properties of a conventional thermoset rubber, but which processes in the melt as a convenional thermoplastic. Thus, TPVs are made of a rubber/thermoplastic polymer mixture in which the rubber phase is highly vulcanized. The thermoplastic phase of a TPV is commonly a polyolefin, in particular polypropylene and the rubber phase is often an ethylene-propylene(-diene) elastomer. See, e.g., *Handbook of Thermoplastic Elastomers,* 2^{nd} ed. (1988), Ch.4, B.M. Walker and C.P. Rader, eds., Van Nostrand Reinhold, New York.

Thermoplastic elastomer compositions consisting of blends of polyolefin resin and cured EPDM rubber are known from, e.g., BE 844,318 and US 4,130,535 and are said to have improved tensile strength.

US 4,311,628 discloses thermoplastic elastomer compositions, comprising blends of EPDM rubber and polyolefin resin, especially polypropylene (PP), in which the rubber is cured with phenolic resin in the presence of a cure activator, exhibiting improved compression set and oil resistance as compared with rubbers being cured with other curatives. Other references describe similar curing systems; see, e.g., US 4,594,390.

The manufacturing of PP/EPDM-based thermoplastic elastomers in which the rubber is cured by a resol (i.e. phenol-formaldehyde resin) in the presence of SnCl₂ as an activator is today considered the classical method which is most commonly used. Nevertheless, this method suffers from some considerable drawbacks, in particular the occurrence of undesired black specks in the thermoplastic vulcanizate compositions, the unpleasant odour of resol cured TPVs, the yellow colour of these products, and further discolouration upon use, whereas the presence of SnCl₂ is additionally responsible for moisture uptake and paint staining.

Alternative vulcanizing systems have been developed and some reached a commercial stage, in particular those using organic peroxides or hydrosiloxanes as crosslinking agents of the elastomeric component.

For example, EP-A-0436724 and EP-A-0574040 disclose partially vulcanized thermoplastic elastomer compositions in which an organic peroxide is used as crosslinking agent for the rubber component. A major drawback of using peroxides as vulcanizing agents is that they cause degradation of polypropylene and therefore they may result in inferior properties of the thermoplastic elastomers.

US 6,251,998 discloses the preparation of thermoplastic elastomers by hydrosilylation crosslinking of the elastomeric component. Such vulcanizing system appears to require special ingredients in order to yield thermoplastic elastomers with desired properties. Such ingredients may be, for example, a special extender oil, a special deactivator, a special stabilizing agent, and the like.

It is an object of the present invention to provide an alternative, effective and easy-to-handle curing system which eliminates at least some, if not all, of the drawbacks mentioned above.

Crosslinking of rubbers with boranes has been known for some decades. For example, US 2,558,559, discloses the vulcanization of butadiene/acrylonitrile rubbers with boron hydrides; US 2,558,560 discloses the preparation of flexible organopolysiloxanes with a boron hydride. GB 1,157,606 discloses the crosslinking of EPDM with boranes. However, as was clearly stated in *Natural Rubber Science and Technology*, A.D. Roberts ed., Oxford University Press (1988), in the conclusion on non-sulphur vulcanization, on pp. 506-7, *"A system based on borane complexes has been examined but these vulcanizates, although again providing reversion and oxidative ageing resistance, exhibited very high creep rates and therefore never reached practical utility.* " In addition, in Hofmann's well-known *Rubber Technology Handbook* (Hanser Publishers, Munich, Vienna, New York, 1989), boranes have not even been mentioned as possible crosslinking agents.

It was therefore very surprising that the present inventors found that borane derivatives exhibited efficiently in the crosslinking of the elastomer phase in thermoplastic elastomers.

The invention therefore provides a thermoplastic elastomer composition comprising a thermoplastic polymer resin, an at least partially borane-vulcanized elastomer, and, optionally, an extender oil.

It was surprisingly found that the present thermoplastic elastomer compositions crosslinked by a borane derivative exhibit not only good elasticity, but also excellent mechanical properties, in particular when a metal halide (e.g. SnCl₂) and/or a metal oxide (e.g. ZnO) is present, a good surface quality, as is illustrated by a smooth surface showing no black specks nor flow marks, and are essentially of white colour without discolourations.

A wide range of thermoplastic resins and/or their mixtures can be employed in the preparation of the thermoplastic elastomers compositions of the present invention, including polypropylene homopolymers or copolymers, HDPE, LOPE, VLDPE, LLDPE, polyethylene copolymers, ethylene propylene copolymer (EP) thermoplastics, cyclic olefin homopolymers or copolymers as well as olefinic block copolymers, polyamide, polyester, polystyrene, polyphenylene sulfide, and polyphenylene oxide. The resins may be in crystalline or semi-crystalline form.

A preferred class of thermoplastic resins is the class of polyolefins. As used herein, the term polypropylene includes homopolymers of propylene as well as reactor copolymers of polypropylene which can contain about 1 to about 20 wt % of ethylene or an α-olefin comonomer of 4 to 20 carbon atoms, and mixtures thereof. They are desirably prepared from monoolefin monomers having 2 to 20 carbon atoms, such as ethylene, propylene, 1-butene, 1-pentene and the like, as well as copolymers derived from linear and cyclic olefins, with propylene being preferred. The polypropylene can be atactic, isotactic or syndiotactic, made with Ziegler-Natta or metallocene catalysts. Its Melt Flow Index (MFI) preferably is between 0.1 and 50 dg/min; more preferably below 20 dg/min, according to ISO norm 1133 (230°C; 2.16 kg load). Commercially available polyolefins may be used in the practice of the invention. Other thermoplastic resins which are substantially inert to the rubber and the borane derivative would also be suitable. Blends of thermoplastic resins may also be used.

The amount of thermoplastic resin found to provide useful compositions is generally from about 5 to about 90 weight percent, based on the weight of the rubber and the resin. Preferably, the thermoplastic resin content will range from about 20 to about 80 percent by weight of the total thermoplastic elastomer composition.

The elastomer which can be suitably used in the compositions of the present invention include any elastomer capable of being vulcanized by a borane derivative as vulcanizing agent. Examples of suitable elastomers are terpolymers of ethylene, propylene and a third monomer (EPDM), a mixture of EPDM and a copolymer of ethylene and propylene (EPM) or a copolymer of ethylene with a higher alpha-olefin, natural rubber, polybutadiene rubber, polyisoprene rubber, styrene-butadiene rubber, (hydrogenated) acrylonitrile-butadiene rubber, isobutene-isoprene rubber, styrene-ethylene/styrene-butyl rubber, isobutylene-p-methylstyrene copolymers or brominated isobutylene-p-methylstyrene copolymers. Of these, EPDM as an elastomer is most preferred. The EPDM preferably contains 50-70 parts by weight of ethylene monomer units, 48-30 parts by weight of monomer units originating from an alpha-olefin, and 1-12 parts by weight of monomer units originating from a non-conjugated diene. A preferred alpha-olefin is propylene. As non-conjugated diene preferably 5-ethylidene-2-norbornene (ENB), 1,4-hexadiene (HD), dicyclopentadiene (DCPD) or vinylnorbornene (VNB), or mixtures thereof, is used.

The elastomer is usually and conveniently prepared using a Ziegler-Natta catalyst, a metallocene catalyst or other single site catalysts. In preparing the compositions of the invention, the amount of rubber generally ranges from about 95 to about 10 weight percent, based on the weight of the rubber and thermoplastic resin. Preferably, the rubber content will be in the range of from about 80 to about 20 weight percent of the total thermoplastic elastomer composition.

The compositions according to the invention further comprise optionally, but preferably an extender oil, also called processing oil. The type will be that ordinarily used in conjunction with the specific rubber or rubbers present in the composition. Examples of suitable oils include paraffinic oil, naphthenic oil, aromatic oil, usually obtained from petroleum fractions, or a highly hydrogenated oil in which the concentration of aromatic compounds is preferably less than 4 wt.% and the concentration of polar compounds is less than 0.3 wt.%. An example of such oil is PennzUltra™ 1199, supplied by Pennzoil (USA). The quantity based on the total rubber content of the thermoplastic elastomer may range from zero to several hundred parts per hundred rubber (phr). Preferably, between 155-200 phr of oil is present in the compositions, more preferably between 160-180 parts.

Preferred weight ratios of the main components of the thermoplastic elastomers according to the present invention, thermoplastic resin/elastomer/extender oil are in the range of 5-50 phr / 20-90 phr / 0-70 phr, respectively.

The term "borane derivative", as used herein, is meant to include borane, BH₃, in any form including diborane, pentaborane, hexaborane, decaborane, and the like, organic borane derivatives, including diphenyl decaborane, dimethyl diborane, and the like, as well as complexes of such compounds which possess vulcanizing activity, with any complexing agent which does not itself react with the borane. Complexes of borane may be readily formed, for example with ammonia, ethers, amines, phosphines or phosphites, and are the preferred borane derivatives for the purpose of the present invention.

The main purpose of the complexing agent is to enable the borane to be handled and stored safely and conveniently at ambient temperatures. The nature of the borane complex may influence the temperature at which vulcanization takes place, so the choice of a suitable complexing agent is usually based on the one hand on the reactivity of the borane complex in the melt at temperatures commonly reached during dynamic vulcanization, and on the hand on the safety aspects during handling and storage of the complex at ambient temperatures. A person skilled in the art may easily select an appropriate borane derivative based on these conditions in preparing a thermoplastic elastomer composition of choice. Examples of suitable complexes include triphenylphosphine borane, tertiary-butylamine borane, triethylenediamine bisborane, triethylamine borane, complexes of decaborane with hexamethylenetetramine or 4,4'-diaminodiphenylmethane, B₂H₅.2NH₃, and the like. Triphenyl phosphine borane is a preferred borane derivative for use in the vulcanization of the rubber component in the thermoplastic elastomer compositions according to the present invention.

When an uncomplexed borane derivative is used, which is not a preferred embodiment of the present invention, it is preferably added in admixture with an inert filler, for example calcined clay.

The amount of triphenylphosphine borane used in the vulcanization of the rubber component is preferably between 0.02-10 phr, more preferably between 0.05-2 phr. For other borane derivatives similar molar equivalents can be applied.

In a preferred embodiment of the invention the thermoplastic elastomer composition further comprises one or more activators, in particular those selected from the group consisting of metal halides and metal oxides. Suitable and preferred metal halides include SnCl₂ and AlCl₃, and the like, of which SnCl₂ is most preferred. A suitable and preferred metal oxide is ZnO. In a most preferred embodiment of the invention the thermoplastic elastomer composition comprises both SnCl₂ and ZnO. Preferred amounts of these activators each range from 0.02 to 10 phr, more preferably between 0.05 and 2 phr.

As is generally known in the art the degree of vulcanization is often expressed in xylene gel content. The method is described in US 5,100,947. Preferably, the elastomer is vulcanized to a gel content higher than 70%, more preferably higher than 90%, even more preferably higher than 95%. Most preferably the rubber is cured to a gel content of at least 98%. Compositions in which the rubber component is only partially borane-vulcanized, i.e. below about 50%, are also encompassed within the present invention and can be used, for example, for less demanding applications.

The thermoplastic elastomer composition according to the invention may further contain conventional additives, which can be introduced into the composition in the thermoplastic resin, the rubber, or in the blend either before, during or after the vulcanization and curing. Examples of such additives include antioxidants, processing aids, reinforcing and non-reinforcing fillers, pigments, waxes, antiblocking agents, antistatic agents, ultraviolet stabilizers, plasticizers (including esters), foaming agents, flame retardants and other additives known in the rubber compounding art, for example described in the Rubber World Magazine Blue Book. Such additives may comprise from about 0.1 to about 300 phr. Fillers which can be utilized include conventional inorganics such as calcium carbonate, clays, silica, talc, titanium dioxide, carbon black and the like. Additives, fillers or other compounds should not interfere with the crosslinking system of the thermoplastic elastomer compositions of the present invention.

The present invention also relates to a process for the preparation of the thermoplastic elastomer compositions described above comprising melt mixing a thermoplastic polymer, an elastomer and, optionally, an extender oil, in the presence of a borane derivative as vulcanizing agent. Preferably, a metal halide is used as an activator, especially SnCl₂. Preferably, a metal oxide, especially ZnO, is used as an activator instead of or - most preferably - in addition to SnCl₂. The preparation can for example conveniently be effected by dynamic vulcanization of a mixture typically containing polypropylene (PP) and EPDM, by feeding the PP and EPDM in separate streams or in the form of a dry blend to a mixing and kneading apparatus, such as an internal mixer or a twin-screw extruder. In the mixing and kneading apparatus heating is effected to above the polyolefin's softening point, usually to above the polyolefin's melting point. Vulcanization is then initiated by adding the vulcanizing borane derivative to the mixture, preferably together with SnCl₂ and/or another accelerator (e.g. ZnO). It is also possible for the vulcanizing agent to be present in the mixture already from the beginning of the mixing and kneading process, and for vulcanization to be initiated after the temperature has risen sufficiently. A frequently used vulcanization temperature is between the polymer's melting point (165°C in the case of polypropylene) and 300°C. In internal mixers the temperature typically ranges between 170 and 210°C, in extruders typically betwwen 200 and 250°C. The vulcanization time is typically between 0.5 and 10 minutes. It is important that the mixture be kneaded during the vulcanization, to ensure that the TPV can be processed as a thermoplastic material. It is preferred for the TPV to be vulcanized to a xylene gel content of at least 95%, preferably at least 98%. The oil may already have been mixed with the not yet vulcanized EPDM that is added to the kneader. It is also possible to separately add all or part of the oil during the kneading process. Fillers and additives may be added before, during or after vulcanization. If fillers or additives have an adverse effect on the vulcanization process or have limited thermal stability, they are of course preferably added after vulcanization.

The melt mixing is generally carried out in conventional mixing equipment, for example roll mills, Banbury mixers, Brabender mixers, continuous mixers for example a single screw extruder, a twin screw extruder and the like. Preferably melt mixing is carried out in a twin screw extruder. The thermoplastic polymer, the elastomer, the oil and the borane vulcanizing agent are as described above.

The present invention also relates to articles comprising a thermoplastic elastomer composition according to the present invention. Such composition may be shaped into articles, for example by extrusion, injection moulding or blow moulding.

The articles of the present invention provide a good surface quality. By "good surface quality" is especially meant a good appearance. The articles are without colours, do not show any black specks, have a smooth surface and show no flow marks. Typical applications include automotive sealings, window profiles and soft-touch applications.

The invention will be further illustrated by the following non-limiting examples and comparative experiments.

### Experimental part

The thermoplastic elastomer compositions according to the present invention were prepared using the following basic recipe: EPDM rubber 100 phr, polypropylene resin 64 phr, oil 137 phr, talcum 30 phr, and Irganox® 1076 0.9 phr. The variable ingredients to complete the compositions are listed in Tables 1 and 2 below.

The Tables also include a Comparative Example A which is a thermoplastic elastomer composition according to the prior art having the same basic recipe as mentioned above in which the rubber component was vulcanized by a resol resin in the presence of SnCl₂ instead of a borane derivative.

All dynamic vulcanizations were conducted on a 50 ml Brabender Plasticorder PLE 330 batch kneader.

The general procedure for producing the thermoplastic elastomers according to the invention was as follows:

### Brabender Plasticorder PLE 330 (volume 50 ml)

- The total weight of each of the compositions was 35 g; the temperature of the kneading chamber 170°C; and the initial rotor speed 50 rpm.
- The components were added in sequential order and after melting of the polypropylene (PP) resin, Irganox® 1076 was added as stabilizer.
- EPDM rubber was added, followed by ZnO (when applied) and talcum and a homogenous melt was then formed. The rotor speed was increased to 80 rpm.
- Oil was added gradually while avoiding overlubrification.
- The crosslinker and SnCl₂ (when applied) were added sequentially and the temperature was adjusted to 210°C.
- Kneading was continued and a temperature of 210°C was reached in about 5 minutes.
- The Brabender was stopped and the kneading chamber emptied.
- The hot TPV is cooled in the air on an aluminium tray.
- Cooling is made under pressure.

### Determination of network density by swelling in cyclohexane

- Half of a pressed sheet (50 x 25 x 1 mm) is weighed and then immersed in cyclohexane for 48 h under gentle stirring. Cyclohexane is refreshed after 48 h.
- The weight of the swollen sample is measured in a sealed glass bottle after the sheet is carefully wiped off by a tissue.
- After drying in a vacuum oven at 100°C for 5 h with nitrogen purging the dry weight is determined.
- If applicable, the cyclohexane gelling content and equilibrium swelling degree is calculated.
- The overall crosslink density is calculated using the Flory-Rehner equation.

### Properties of the TPVs

The following properties of the thermoplastic vulcanizates of the invention were analyzed on compression moulded samples.
- Tensile strength, MPa, (ISO 37 dumb-bell 3); sheets of 50 x 50 x 1 mm are pressed for its determination.
- Elongation, %, according to ASTM D-412-92, Method A, Die C
- 100% Modulus, MPa, according to ASTM D-412-92, Method A, Die C
- Hardness (DIN 53505); for the determination sheets of 50 x 50 x 6 mm are pressed
- Compression sets at various temperatures (22h ISO 815); for the determination sheets of 50 x 50 x 6 mm are pressed.
- Colour and appearance: visual inspection.

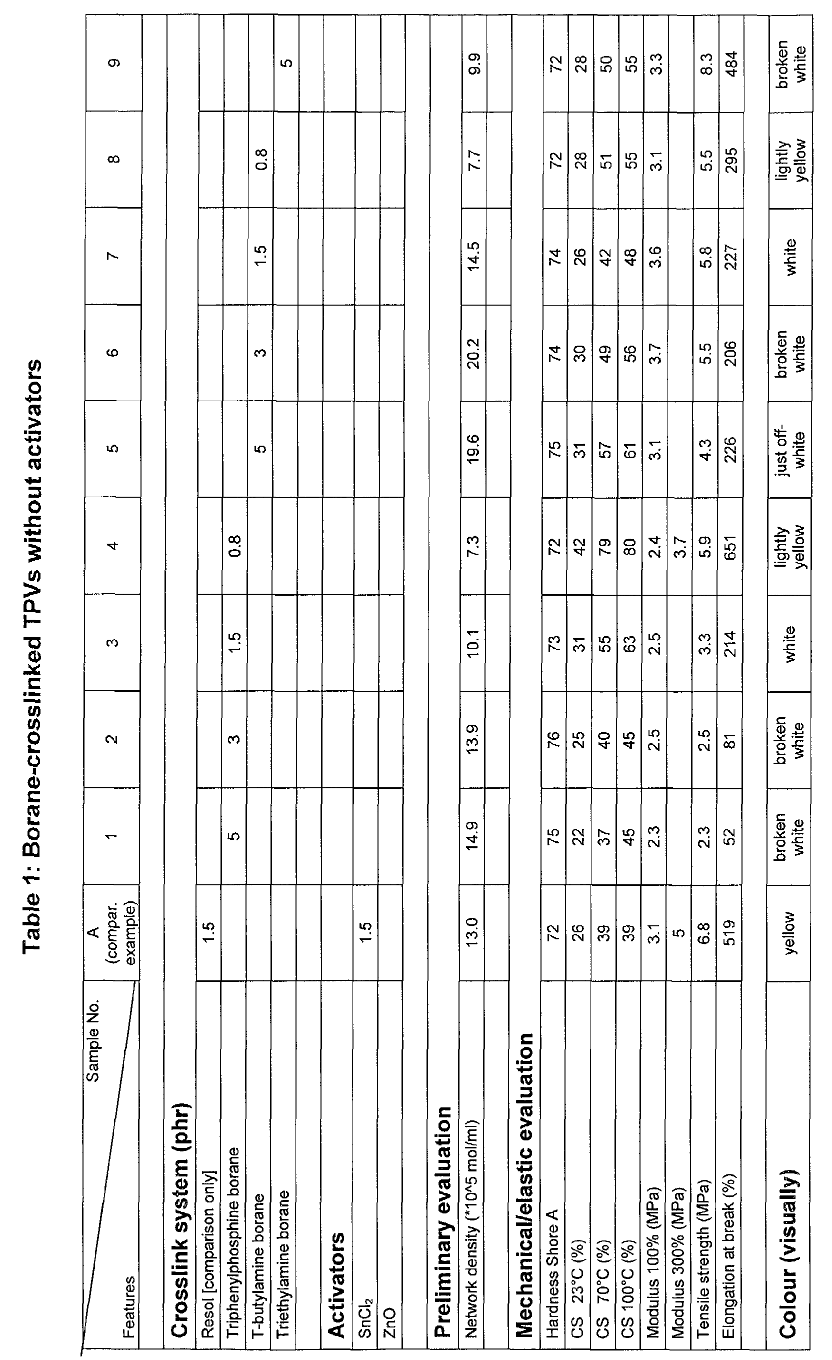

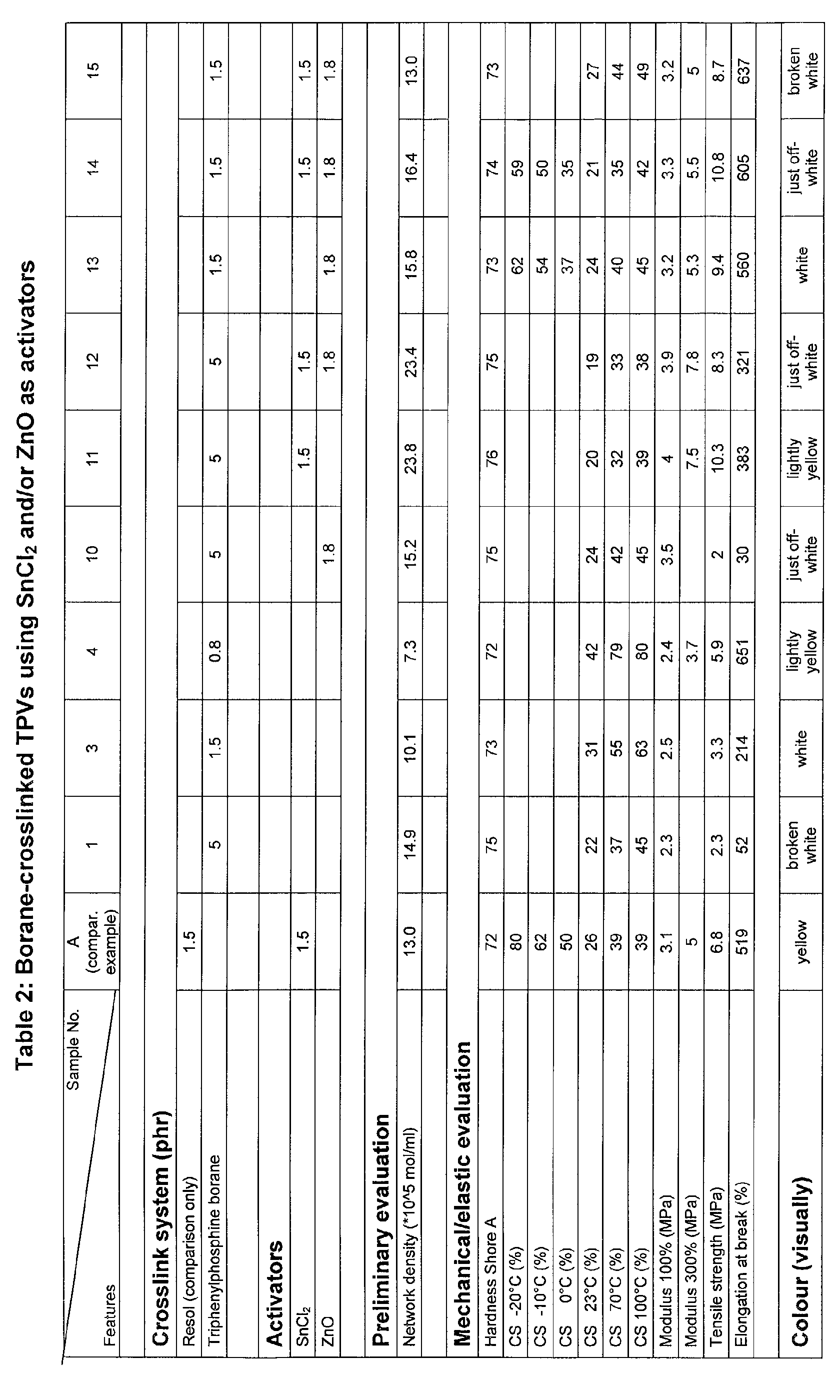

The data in Table 1 indicate that boranes, such as triphenylphosphine borane, t-butylamine borane and triethylamine borane, can be conveniently used for the dynamic vulcanization of EPDM/PP/oil blends. TPVs are obtained with a very high network density and corresponding satisfactory elastic and mechanical properties. In all cases, white or lightly coloured products are produced, clearly superior to the resol-crosslinked reference TPV, which has a yellow colour. The borane-crosslinked TPVs do not show any black specks. A further improvement of the properties can be obtained by applying additional activators as illustrated in Table 2. Upon adding SnCl₂ the tensile properties are strongly improved, while upon addition of SnCl₂ in combination with ZnO TPVs with both excellent elastic and mechanical properties are produced, while maintaining the good colour characteristics. In addition, the low temperature compression set of the borane-crosslinked TPVs is superior to those of the comparative resol-TPV.

## Claims

1. A thermoplastic elastomer composition which comprises a thermoplastic resin, an at least partially borane-vulcanized elastomer, and, optionally, an extender oil.

2. A composition according to claim 1, wherein the thermoplastic resin is selected from the group consisting of polypropylene homopolymers, polypropylene copolymers, HDPE, LDPE, VLDPE, LLDPE, polyethylene copolymers, ethylene propylene copolymer (EP) thermoplastics, cyclic olefin homopolymers, cyclic olefin copolymers as well as olefinic block copolymers, polyamide, polyester, polystyrene, polyphenylene sulfide, and polyphenylene oxide.

3. A composition according to claim 2, wherein the thermoplastic resin is a polyolefin.

4. Acomposition according to claim 3, wherein the polyolefin is polypropylene.

5. A composition according to any one of claims 1 to 4, wherein the at least partially borane-vulcanized elastomer is selected from the group consisting of terpolymers of ethylene, propylene and a third monomer (EPDM), a mixture of EPDM and a copolymer of ethylene and propylene (EPM) or a copolymer of ethylene with a higher alpha-olefin, natural rubber, polybutadiene rubber, polyisoprene rubber, styrene-butadiene rubber, acrylonitrile-butadiene rubber, hydrogenated acrylonitrile-butadiene rubber, isobutene-isoprene rubber, styrene-ethylene/styrene-butyl rubber, isobutylene-p-methylstyrene copolymers, and brominated isobutylene-p-methylstyrene copolymers.

6. A composition according to claim 5, wherein the at least partially borane-vulcanized elastomer is EPDM rubber or a mixture of EPDM rubber with EPM.

7. A composition according to any one of claims 1 to 6, wherein the at least partially borane-vulcanized elastomer is vulcanized by a borane derivative where the borane derivative is a borane complex selected from the group consisting of triphenylphosphine borane, tertiary-butylamine borane, triethylenediamine bisborane, triethylamine borane, a complex of a borane with hexamethylenetetramine, and a complex of a borane with 4,4'-diaminodiphenylmethane.

8. A composition according to claim 7, wherein the borane complex is triphenylphosphine borane.

9. A composition according to any one of claims 1 to 8, further comprising at least one activator.

10. A composition according to claim 9, wherein the at least one activator is selected from the group consisting of a metal halide and a metal oxide.

11. A composition according to claim 10, wherein the metal halide is SnCl₂ or AlCl₃, and the metal oxide is ZnO.

12. A composition according to claims 9 to 11, wherein the composition comprises both SnCl₂ and ZnO.

13. A composition according to any one of claims 1 to 12, which comprises polypropylene, at least partially borane-vulcanized EPDM, oprionally an extender oil, SnCl₂, and ZnO

14. A process for preparing a thermoplastic elastomer composition which comprises the step of melt mixing a thermoplastic polymer, an elastomer and, optionally, an extender oil, in the presence of a borane derivative as vulcanizing agent.

15. A process according to claim 14, wherein the borane vulcanization is carried out in the presence of an activator.

16. A process according to claim 15, wherein the activator is at least one of SnCl₂ and ZnO.

17. An article comprising an thermoplastic elastomer composition as defined in any one of claims 1 to 13, or produced by a process according to any one of claims 14 to 16..
